Europäisches Patentamt

European Patent Office

Office européen des brevets

(11) Publication number: **0 052 585**
**B2**

(12) **NEW EUROPEAN PATENT SPECIFICATION**

(45) Date of publication of the new patent specification: **25.07.90**

(21) Application number: **81850195.9**

(22) Date of filing: **22.10.81**

(51) Int. Cl.⁵: **B 23 B 27/16**

(54) Cutting tool.

(30) Priority: **17.11.80 SE 8008038**

(43) Date of publication of application:
**26.05.82 Bulletin 82/21**

(45) Publication of the grant of the patent:
**16.01.85 Bulletin 85/03**

(45) Mention of the opposition decision:
**25.07.90 Bulletin 90/30**

(84) Designated Contracting States:
**AT BE CH DE FR GB IT LI NL**

(56) References cited:
**DE-A-2 164 496**
**DE-A-2 359 059**
**DE-B-1 948 160**
**FR-A-2 170 475**
**US-A-3 341 923**
**US-A-3 805 351**

**ISO 6987 E**

(73) Proprietor: **Santrade Ltd.**
**Alpenquai 12 P.O. Box 321**
**CH-6002 Luzern (CH)**

(72) Inventor: **Hellström, Ingvar**
**Kittelvägen 7**
**S-811 37 Sandviken (SE)**

(74) Representative: **Seiffert, Klaus et al**
**Gustav-Freytag-Strasse 25 Postfach 6145**
**D-6200 Wiesbaden 1 (DE)**

Courier Press, Leamington Spa, England.

## Description

This invention relates to a cutting tool comprising a holder and a positive cutting insert provided with a hole extending through the insert which is placed in a cutting insert-receiving site of the holder body. A locking screw placed with thread engagement in a bore in the holder extends into the hole of the cutting insert and is arranged to clamp the cutting insert against a side support in the insert-receiving site.

Hitherto known cutting tools of this type usually comprise some kind of pressure generating means arranged in the holder, which means cooperates with one end of a pin in order to bring about the lever movement of the pin. For additional locking means, besides the pin, additional space in the cutting insert holder is required.

According to US—A—3,341,920 which shows the features of the first part of claim 1 cutting tool is previously known in which only one locking screw is used for the clamping of the cutting insert. This screw extends into the central hole of the cutting insert and is in threaded engagement with the holder body. It is true that the locking screw is the only locking means but instead the wall of the hole of the boring receiving the locking screw, or the support plate of the cutting insert has been designed with a specially formed stop surface with high requirements as to the tolerances in order than by cooperation with the mentioned stop surface the locking screw is imparted a pivotal movement sideways during its threading into the holder, whereby the cutting insert is clamped against an appurtenant side support in the insert-receiving site. At the same time there has to be a certain thread loose between the locking screw and the screw hole. Another drawback with this type of cutting insert holder, especially those used for clamping cutting inserts with conical central hole, has been that the locking screw has had to be threaded out wholly when exchanging the cutting insert or when indexing the cutting insert for presenting a new cutting edge.

Each one of DE—C1—1,295,967 and US—A—3,805,351 discloses a cutting tool in which only a central locking screw is used for clamping a cutting insert with a centre hole. In this connection the hole is designed with a sectional form conically decreasing towards the base surface of the cutting insert-receiving site and the head of the screw has been given as corresponding conical form. Moreover, the locking screw in these tools is designed with a cylindrical part portioned between the head of the screw and the thread part, which cylindrical part is guided with slip fit in a corresponding cylindrical part of the hole for the screw in the tool. In these embodiments a thorough adaptaion of the form is required partly between the screw and the hole of the cutting insert, partly between the screw and the hole of the tool. Moreover, the last mentioned detail design reduces the possibility to achieve a low overall height of the holder.

The US—A—3,341,923 shows a cutting tool in which a positive cutting insert is clamped by means of a locking screw. The eccentrical end part of the locking screw is tapered so as to cooperate with a tapered hole in the cutting insert. The largest diameter of the end part is smaller than the smallest diameter of the hole in the insert whereby a waist is necessitated between the end part and the threaded part. The waist impairs on the stability of the end part. The circle of juncture between the end part and the waist provide a weak area which may produce fatigue fractures. It is an advantage when clamping a positive cutting insert to have a large inclination angle of the line contact between the wall of the hole and the end part relative to the centre line of the end part whereby the component of force against the support surface of the tool holder can be made large. However, there is a contradiction between having the insert hole slidable over the end part of the screw and having a large inclination angle and therefore the known device cannot hold a positive cutting insert in an optimal way; i.e. the end part of the screw in the known device has a small component of clamping force in direction towards the base support surface relative to the force component directed towards the shoulder surface, which component gets even smaller as the end may be subjected to bending during tightening of the locking screw.

DE—A—1,948,160 shows a cutting tool holder having a locking screw end part, the cross section of which deviates from that of the cutting insert hole such that when threading in the locking screw the latter is turned to a position where the end part cooperates with the cylindrical wall of the hole of the cutting insert in only one contact point. However, this known device cannot hold a positive cutting insert as the locking screw provides no or small clamping force in direction towards the base support surface of the holder.

According to claim 1 a cutting tool is now presented which solves the above-mentioned problems in a simple way. The essential part of the invention is that the end part of the locking screw threaded into the holder of the tool, which end part is positioned in the hole of the cutting insert, is bent such that it is eccentrically positioned relative to the rest of the locking screw and has an unsymmetrical cross section that deviates from that of the hole of the positive cutting insert such that when threading in the locking screw the latter is turned to a position where the mentioned end part only cooperates with the wall of the hole of the positive cutting insert in one contact point. The nature of the contact between the end part and the wall of the hole provides numerous advantages. For example, such contact is basically in the form of a point contact, rather than an extended line contact or area contact, which simplifies the formation of the contact surfaces. That is, strict dimensional and shape tolerances need not be adhered to as in the case where the surfaces are to be made mutually parallel to achieve a line contact or area contact. Furthermore, since the clamping force has directional components directed toward both the base surface and the side support, the insert is positively clamped against the base surface and the side support to minimize chattering of the insert during a cutting operation. The point of contact enables the clamping force to be concentrated at that point rather than being disposed along a line or an area.

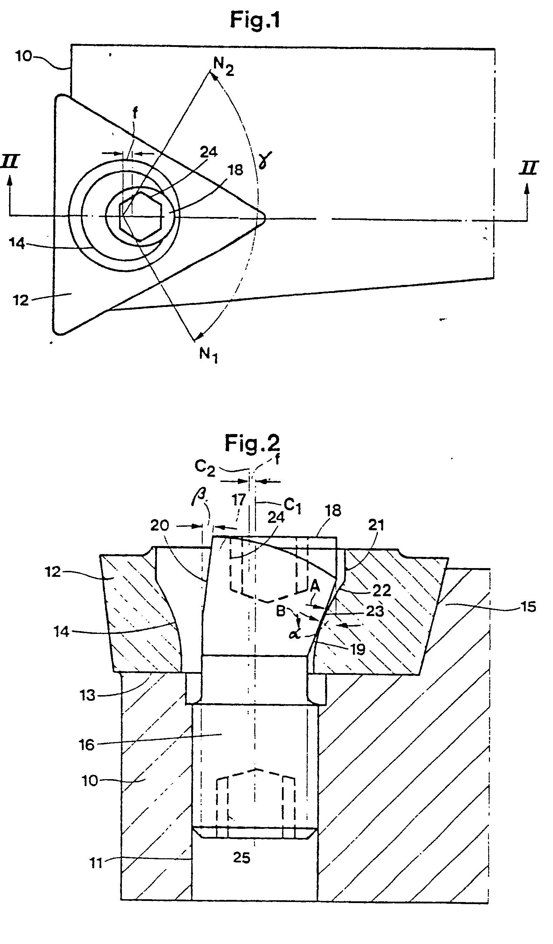

A preferred embodiment of the invention is described more closely in the following in connection with the accompanying drawing figures, in which Fig. 1 is a plan view of the cutting insert holder and in which Fig. 2 is a sectional view along the line II—II of Fig. 1.

In the drawing 10 denotes a positive cutting inset holder body which is at one end part provided with a cutting insert-receiving site with a threaded bore 11 connected to the bottom of the insert-receiving site. In the insert-receiving site there is arranged a positive cutting insert 12 resting against a base surface 13. The cutting insert 12 has a central hole 14 therethrough, which includes a contact surface 22 decreasing in cross-sectional area in a direction towards the base surface 13. The base surface 13 forms the bottom support surface for the cutting insert while the side support of the insert-receiving site is usually limited by a base surface and two side support surfaces. The centre axis of the bore 11 is denoted $C_1$ and is oriented mainly perpendicularly to the base surface 13.

In the bore 11 there is arranged a partly threaded locking screw 16, the head 17 of which is arranged to engage actively with the cutting insert hole 14. The end part 17 of the locking screw 16 is radially bent such that its upper end surface 18 is eccentrically positioned in relation to the bore 11.

In order to be able to clamp the positive cutting insert securely such that it is brought to rest against all support surfaces in the insert-receiving site, it is required that the threads of the screw 16 and the bore 11 are designed such that the stop point between the end part 17 and the cutting insert hole 14 is positioned within a sector $\gamma$, the size of which is defined as the angle value between the two normals $N_1$ and $N_2$ of two of the side edges of the cutting insert 12. This is achieved by the fact that that the centre axis $C_1$ of the bore 11 is eccentrically displaced towards the interior of the cutting insert holder a distance f relative to the centre axis $C_2$ of the cutting insert hole.

In the disclosed embodiment the design of the end part 17 is such that its jacket surface has conical contour with varying inclination angle round its periphery, the contact surface active during the clamping being denoted with 19 while the diametrically opposite cone part is denoted with 20. The first mentioned cone surface 19 has a larger inclination angle $\alpha$ relative to a normal of the base surface 13 compared with the corresponding inclination angle $\beta$ of the opposite cone surface 20. The cutting insert hole 14 in the disclosed embodiment is, as mentioned previously, designed with a section the size of which is reduced towards the base surface 13, in this case in the form of a cavity, the upper part 21 of which is cylindrical and the lower contact surface part 22 is convexly narrowed. When threading the screw 16 into the holder 10 the cone surface 19 is applied against the convex hole wall 22 in a contact point 23. The conical contact surface 19 forms an acute angle with the base surface 13 such that the clamping force has components A and B directed towards the side support 15 and the base surface 13, respectively. A characteristic feature of the upper end part of the screw 16 is that it has rounded sectional form with a largest diameter that is less than the smallest diameter of the cutting insert hole 14 such that after loosening the screw about one-half revolution the cutting insert 12 can be upwardly lifted out of its insert-receiving site.

Thus, the locking screw need not be threaded out wholly when taking away the cutting insert.

After indexing a new cutting edge of the existing cutting insert or after exchange to a new cutting insert and localization of the same on the locking screw, the latter is tightened until point contact necessary for the clamping at the contact place 23 has been achieved.

According to an alternative embodiment of the invention the upper end part 17 of the locking screw may be at least to a certain extent be convexly designed at the part 19 while the wall of the cutting insert hole 14 is instead conically narrowed towards the base surface 13, in which case there is also a point contact between the locking screw 16 and the cutting insert hole 14 when clamping the cutting insert.

In the embodiment disclosed in Fig. 2 the axis of the locking screw, as stated above, is perpendicular to the base surface 13. According to a preferred alternative embodiment the bore 11 may be somewhat inclined relative to the base surface 13 and bore 11 extends obliquely downwards and outwards towards the end part of the holder. Due to this fact a more clearly defined stop surface or stop point at the contact point 23 between the end part 17 of the screw and the cutting insert hole 14 is achieved.

The upper end 17 of the screw 16 is in a usual way provided with a polygonal key grip 24 countersunk in the screw for making the turning of the screw possible with a suitable key tool. In the disclosed embodiment also the opposite end part of the locking screw 16 has been designed with a similar key grip 25, which facilitates the cutting insert exchange when the cutting insert holder has to be mounted with its upside down in a machine.

**Claims**

1. Cutting tool comprising a cutting insert holder (10) having an insert-receiving site which includes a base surface (13), a side support (15) and a threaded bore (11) in the base surface (13), a positive cutting insert (12) seated within the insert-receiving site in contact with the base surface (13) and the side support (15), the insert (12) having a hole (14) therethrough which includes a first contact surface (22) decreasing in cross-sectional area in a direction towards the base surface (13), a locking screw (16) extending through the hole (14) and threaddedly mounted in the bore (11), said screw (16) including a head (17) at one end thereof, a threaded portion at another end thereof and a waist situated therebetween, said head (17) being disposed within the hole (14) and including a second contact surface (19) engaging the first contact surface (22) and imposing a clamping force thereagainst to clamp the insert (12) to the holder (10), the head (17) being arranged eccentrically relative to a longitudinal axis of the screw (16), the largest cross section of the head (17) being less than the smallest cross section of the hole (14), such that upon loosening of the screw (16) by about one-half turn the insert (12) is slidably removable over the head (17), characterized in that one of the first and second contact surfaces (22 and 19, resp.) is of convex configuration, and the other is of conical configuration to produce point contact (23) therebetween, the conical surface being oriented at an acute angle relative to the base surface (13) so that the clamping force has directional components (A, B) extending towards the base surface (13) and the side support (15), and in that the head (17) of the screw is bent such that it is eccentrically positioned relative to the waist and the threaded portion of the locking screw (16), towards the contact point (23), when mounted, and has an unsymmetrical cross-section, taken along a plane including the center axis ($C_1$) of the bore (11) and said contact point (23).

2. Cutting tool according to claim 1, characterized in that the longitudinal axis ($C_1$) of the bore (11) is displaced relative to the longitudinal axis ($C_2$) of the hole (14) in a direction away from the effective cutting edge of the insert (12).

3. Cutting tool according to claim 1 or 2, characterized in that the longitudinal axes ($C_1$ and $C_2$) of the bore (11) and the hole (14) are oriented perpendicularly to the base surface (13).

4. Cutting tool according to claim 1 or 2, characterized in that the screw (16) is threaded into the bore (11) which counted from the base surface (13) extends obliquely downwards and outwards towards the end part of the holder (10).

5. Cutting tool according to any one of the preceding claims, characterized in that the first contact surface (22) is of convex configuration and the second contact surface (19) is of conical configuration.

6. Cutting tool according to any one of the preceding claims, characterized in that the conical angle (α) of the second contact surface (19) forms a larger angle relative to a line normal to the base surface (13) than does a conical portion (20) of the head (17) disposed diametrically opposite the second contact surface (19).

7. Cutting tool according to any one of the preceding claims, characterized in that the insert hole (14) includes an upper cylindrical portion (21) disposed above and joined with the first contact surface (22).

## Patentansprüche

1. Schneidwerkzeug mit einem Schneideinsatzhalter (10) mit einem einen Einsatz aufnehmenden Sitz, der eine Basisfläche (13), ein Seitenlager (15) und eine Gewindebohrung (11) in der Basisfläche (13) enthält, mit einem in dem den Einsatz aufnehmenden Sitz angeordneten positiven Schneideinsatz (12) in Kontakt mit der Basisfläche (13) und dem Seitenlager (15), wobei der Einsatz (12) ein Durchgangsloch (14) aufweist, das eine erste Kontaktfläche (22) enthält, die in der Querschnittsfläche in Richtung auf die Basisfläche (13) zu abfällt, mit einer sich durch das Loch (14) erstreckenden und in die Gewindebohrung (11) eingreifenden Klemmschraube (16), die an einem Ende einen Kopf (17), an dem anderen Ende einen Gewindeabschnitt und eine dazwischenliegende Taille aufweist, wobei der Kopf (17) innerhalb des Loches (14) angeordnet ist und eine zweite Kontaktfläche (19) aufweist, die an der ersten Kontaktfläche (22) angreift und auf diese eine Klemmkraft aufbringt, welche den Einsatz (12) am Halter (10) klemmt, wobei der Kopf (17) in Bezug auf eine Längsachse der Schraube (16) exzentrisch angeordnet ist, wobei der größte Querschnitt des Kopfes (17) kleiner ist als der kleinste Querschnitt des Loches (14), so daß beim Lösen der Schraube (16) durch etwa eine halbe Drehung der Einsatz (12) über den Kopf (17) gleitend abnehmbar ist, dadurch gekennzeichnet, daß eine der beiden Kontaktflächen (22, 19) konvex ausgebildet und die andere konisch ausgebildet ist, um zwischen ihnen einen Punktkontakt (23) zu erzeugen, wobei die konische Fläche unter einem spitzen Winkel zur Basisfläche (13) orientiert ist, so daß die Klemmkraft sich auf die Basisfläche (13) und auf das Seitenlager (15) erstreckende Richtungskomponenten (A, B) enthält, und daß der Kopf (17) der Schraube so geneigt ist, daß er relativ zur Taille und dem Gewindeabschnitt der Klemmschraube (16) im montierten Zustand in Richtung auf den Punktkontakt (23) exzentrisch angeordnet ist und entlang einer Ebene, welche die Mittelachse ($C_1$) der Bohrung (11) und den Punktkontakt (23) enthält, einen unsymmetrischen Querschnitt hat.

2. Schneidwerkzeug nach Anspruch 1, dadurch gekennzeichnet, daß die Längsachse ($C_1$) der Bohrung (11) in Bezug auf die Längsachse ($C_2$) des Loches (14) in Richtung von der wirksamen Schneidkante des Einsatzes (12) weg versetzt ist.

3. Schneidwerkzeug nach Anspruch 1 oder 2, dadurch gekennzeichnet, daß die Längsachsen ($C_1$ und $C_2$) der Bohrung 11 und des Loches (14) rechtwinkelig zur Basisfläche (13) orientiert sind.

4. Schneidwerkzeug nach Anspruch 1 oder 2, dadurch gekennzeichnet, daß die Schraube (16) in die Bohrung (11) eingeschraubt ist, die sich von der Basisfläche (13) aus schräg nach abwärts und nach auswärts in Richtung auf den Endteil des Halters (10) erstreckt.

5. Schneidwerkzeug nach einen der vorhergehenden Ansprüche, dadurch gekennzeichnet, daß die erste Kontaktfläche (22) konvex ausgebildet ist und daß die zweite Kontaktfläche (19) konisch ausgebildet ist.

6. Schneidwerkzeug nach einem der vorhergehenden Ansprüche, dadurch gekennzeichnet, daß der Konuswinkel (α) der zweiten Kontaktfläche (19) in Bezug auf eine senkrecht auf der Basisfläche (13) stehende Linie einen größeren Winkel bildet als ein konischer Teil (20) des Kopfes (17), der der zweiten Kontaktfläche (19) diametral gegenüberliegt.

7. Schneidwerkzeug nach einem der vorhergehenden Ansprüche, dadurch gekennzeichnet, daß das Loch (14) des Einsatzes einen oberen zylindrischen Teil (21) aufweist, der oberhalb der ersten Kontaktfläche (22) angeordnet ist und an diese angrenzt.

**Revendications**

1. Outil de coupe comportant un support (10) de plaquette de coupe qui présente un logement de réception de plaquette de coupe, ce logement présentant une surface de base (13), un support latéral (15) et un alésage fileté (11) pratiqué à partir de la surface de base (13), une plaquette de coupe positive (12) placée dans le logement de réception de plaquette et en contact avec la surface de base (13) et le support latéral (15), la plaquette (12) comportant un alésage (14) qui la traverse et qui présente une première surface de contact (22) dont la section droite diminue vers la surface de base (13), une vis de verrouillage (16) traversant l'alésage (14) et vissée dans l'alésage (11), ladite vis (16) comportant à une de ses extrémités une tête (17), une partie filetée à une autre de ses extrémités et une partie centrale située entre celles-ci, ladite tête (17) étant placée dans l'alésage (14) et présentant une seconde surface de contact (19) coopérant avec la première surface de contact (22) et appliquant à celle-ci une force de serrage pour serrer la plaquette de coupe (12) contre le support (10), la tête (17) étant disposée excentriquement par rapport à l'axe longitudinal de la vis (16), la section droite la plus grande de la tête (17) étant inférieure à la section droite la plus petite de l'alésage (14) de sorte que, au desserrage de la vis (16) d'environ un demi-tour, la plaquette de coupe (12) peut être enlevée par glissement par dessus la tête (17), caractérisé en ce que l'une desdites première et seconde surfaces de contact (22 et 19) est de forme convexe et en ce que l'autre est de forme conique pour l'obtention d'un point de contact (23) entre celles-ci, la surface conique étant orientée pour définir un angle aigu par rapport à la surface de base (13), de sorte que la force de serrage présenté des composantes directionnelles (A, B) qui s'étendent vers la surface de base (13) et vers le support latéral (15), et en ce que la tête (17) de la vis présente un coude de sorte que, lorsqu'elle est montée, elle est positionnée de façon excentrique, dans la direction du point de contact (23), par rapport à la partie centrale et à la partie filetée de la vis de verrouillage (16), et elle présente une section transversale asymétrique, prise le long d'un plan comprenant l'axe central ($C_1$) de l'alésage (11) et ledit point de contact (23).

2. Outil de coupe selon la revendication 1, caractérisé en ce que l'axe longitudinal ($C_1$) de l'alésage (11) est décalé par rapport à l'axe longitudinal ($C_2$) de l'alésage (14) dans une direction qui s'éloigne de l'arête de coupe active de la plaquette (12).

3. Outil de coupe selon les revendications 1 ou 2, caractérisé en ce que les axes longitudinaux ($C_1$ et $C_2$) de l'alésage (11) et de l'alésage (14) sont orientés perpendiculairement à la surface de base (13).

4. Outil de coupe selon l'une des revendications 1 ou 2, caractérisé en ce que la vis (16) est vissée dans l'alésage (11) qui, à partir de la surface de base (13), s'étend obliquement vers le bas et vers l'extérieur vers l'extrémité du support (10).

5. Outil de coupe selon l'une quelconque des revendications précédentes, caractérisé en ce que la première surface de contact (22) est de forme convexe et en ce que la seconde surface de contact (19) est de forme conique.

6. Outil de coupe selon l'une quelconque des revendications précédentes, caractérisé en ce que l'angle (α) de conicité de la seconde surface de contact (19) définit, par rapport à une ligne normale à la surface de base (13), un angle supérieur à celui que fait avec celle-ci une partie conique (20) de la tête (17) qui est diamétralement opposée à la seconde surface de contact (19).

7. Outil de coupe selon l'une quelconque des revendications précédentes, caractérisé en ce que l'alésage (14) de la plaquette présente une partie supérieure cylindrique (21) située au-dessus de la première surface de contact (22) et se raccordant à celle-ci.

## Fig.1

## Fig.2